# EUROPEAN PATENT APPLICATION

(11) **EP 3 817 349 A1**
(43) Date of publication of application: **05.05.2021**
(21) Application number: 20200039.4
(22) Date of filing: 05.10.2020
(51) Int. Cl.: H04M 1/72409, H04M 1/72412, G06F 1/16

(54) **PORTABLE VEHICLE TOUCH SCREEN DEVICE UTILIZING FUNCTIONS OF SMART PHONE**

(30) Priority: 01.11.2019 TW 108214431 U
(71) Applicant: Orient Development Enterprises Ltd., New Taipei City 24155 (TW); TFVC Shanghai Co., Ltd., Shanghai 200052 (CN)
(72) Inventor: CHEN, Yonsoon, New Taipei City, 24155 (CN)
(74) Representative: Ruschke, Hans Edvard

(57) **Abstract**

A control unit (1) including a software development kit for Android system; a first port (2) electrically connected to the control unit (1) and capable of recognizing whether a first device electrically connected to the first port (2) is equipped with iOS system, wherein the first port (2) has a function of Apple Ready capable of activating a first application program of the first device equipped with iOS system; at least one second port (3) electrically connected to the control unit (1) and capable of being connected to a second device of Android system, wherein the smart phone transmits an interface of a second application program or audio data to the portable touch screen (4) device; a touch screen (4) electrically connected to the control unit (1), wherein the touch screen (4) displays an interface of the first application program or the second application program and transmits operation signals through the first port (2) or the second port (3).

## Description

### BACKGROUND OF THE INVENTION

### Field of the Invention

The invention relates to a screen device, and more particularly to a portable vehicle touch screen device utilizing functions of smart phones.

### Description of the Related Art

Smart in-vehicle systems are equipped to in order to commercial middle or high level car to improve the functionality. Such smart in-vehicle systems are formed by the original in-vehicle communication system combined with network technology. The conventional on-board system cant only play CD or display vehicle status. As network technology develop rapidly and of the hardware specifications of the on-board system is continuously improved, the current on-board system has stepped into the era of smart networking.

As smart phones owned by everyone is continuously developed, their functions , including audio-video display, navigation and even record of driving condition. In order to integrate the mobile phone and the on-board system and directly apply the aforementioned functions of the mobile phone to the vehicle, some standard protocols of smart phone for the control of on-board system have subsequently developed , allowing the smart on-board system to directly control the application functions of the mobile phone supporting the on-board system, including navigation, telephone or voice control, etc. Therefore, application functions are becoming more and more diversified.

However, the aforementioned smart phone integrated in-vehicle system needs to be used in conjunction with the integrated native in-vehicle system equipped by original car seller, otherwise the functions of the smart phone cannot be extended to the on-board screen and operated by touch. For vehicles without touch screens and smart car systems, if users want to use such smart on-board systems with integrated mobile phones, they may change a new car equipped with the smart on-board system or modify the old on-board system, such as detachment of the instrument panel and various lines in the vehicle and installation of new on-board system. However, such modification may have a high cost and lose the original warranty of the car.

### BRIEF SUMMARY OF THE INVENTION

An object of the invention is to provide a portable touch screen device mapping functions of smart phones. Since the portable vehicle touch screen device of the present invention has a separate screen which can be connected to a smart phone using an operation system developed by Apple company (carplay or vehicle iOS) or Android operation system, the portable vehicle touch screen device of the present invention can be applied to a vehicle without the modification of the original on-board system, which reduce the cost of the on-board system.

The invention provides a portable touch screen device. The portable touch screen device in accordance with an exemplary embodiment of the invention includes a control unit including a software development kit for Android system, wherein the control unit serves as a control center and controls a plurality of aiding functions of the portable touch screen device; a first port electrically connected to the control unit and capable of recognizing whether a first device electrically connected to the first port is equipped with iOS system, wherein the first port has a function of Apple Ready capable of activating a first application program of the first device equipped with iOS system; at least one second port electrically connected to the control unit and capable of being connected to a second device of Android system, wherein the smart phone transmits an interface of a second application program or audio data to the portable touch screen device; a touch screen electrically connected to the control unit, wherein the touch screen displays an interface of the first application program or the second application program and transmits operation signals through the first port or the second port; a wireless connecting unit electrically connected to the control unit, wherein an electronic device is connected to the portable touch screen device through the wireless connecting unit; a power connecting unit electrically connected to the control unit, a power supply device of the vehicle and an audio device of the vehicle, wherein the power supply unit provides electricity power for the portable touch screen device; an audio module electrically connected to the control unit, wherein the audio module includes a microphone receiving sound and transmitting an audio signal corresponding to the received sound to the smart phone and a speaker receiving an audio signal from the smart phone and giving off sound corresponding to the received audio signal.

A detailed description is given in the following embodiments with reference to the accompanying drawings.

### BRIEF DESCRIPTION OF THE DRAWINGS

The invention can be more fully understood by reading the subsequent detailed description and examples with references made to the accompanying drawings, wherein:
Fig. 1 is a block diagram of an embodiment of a portable touch screen device of the invention;
Fig. 2 is schematic view of an embodiment of a portable touch screen device of the invention; and
Fig. 3 is a block diagram of another embodiment of a portable touch screen device of the invention.

### DETAILED DESCRIPTION OF THE INVENTION

The following description is of the best-contemplated mode of carrying out the invention. This description is made for the purpose of illustrating the general principles of the invention and should not be taken in a limiting sense. The scope of the invention is best determined by reference to the appended claims.

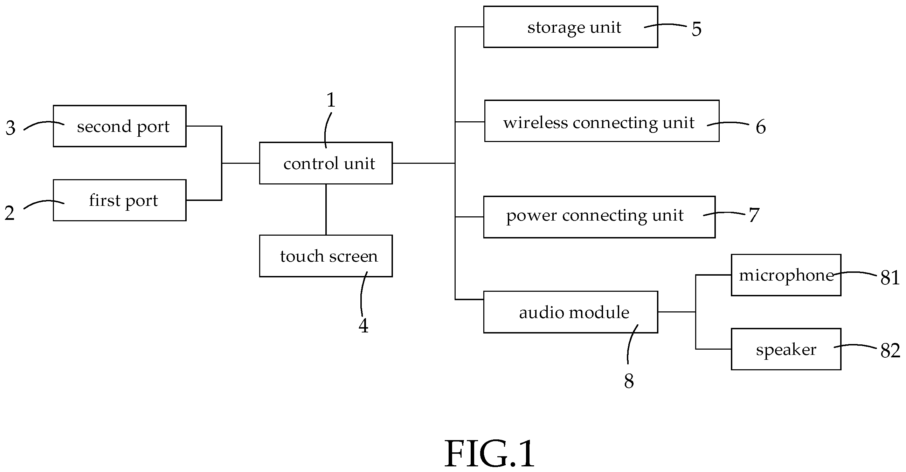

Referring to Fig. 1, a portable touch screen device of the invention includes a control unit 1 having a software development kit for Android system, wherein the control unit 1 serves as a control center and controls a plurality of aiding functions of the portable touch screen device. The control unit 1 is electrically connected to a first port 2 which is electrically connected to a first device using an operation system developed by Apple Inc. (iOS system). In this embodiment, the first port 2 is the lightening port, which is a port for electronic devices developed by of Apple Inc. Therefore, the first port 2 can recognize whether the first electronic device connected to the first port 2 is an electronic device using the iOS operation system. The first port 2 has a function of "apple ready", which activates application programs installed in the first electronic device (smart phone) when the first electronic device is connected to the first port 2.

Referring to Fig. 1, the control unit 1 is electrically connected to a second port 3 which is a universal serial bus (USB) port. The second port 3 has a MirrorLink standard and supports any video play meeting the MirrorLink standard. The second port 3 is used to connected to a second device which can be a smart phone using Android operation system, whereby the second device can transmit images or audio data to the portable touch screen device through the second port 3. The control unit 1 is electrically connected to a touch screen 4 which displays images or operation interface of application programs and transmits operation signals to the smart phone.

Referring to Fig. 1, the control unit 1 is electrically connected to a storage unit 5. The storage unit 5 can be a storage hard disc drive (such as hard disc drive or solid state drive) and stores data or application programs related to the portable touch screen device. The control unit 1 is electrically connected to a wireless connecting unit 6. The wireless connecting unit 6 can be a WIFI module capable of connecting to the smart phone in a wireless way. The control unit 1 is electrically connected to power connecting unit 7. The power connecting unit 7 is used to connect a power supply device of a vehicle and audio system of the original on-board system of the vehicle, whereby the power supply device of the vehicle provides electrical power for the portable touch screen device of the invention. The portable touch screen device of the invention further includes an audio module 8 electrically connected to the control unit 1. The audio module 8 includes a microphone 81 and a speaker 82. A user may input voice through the microphone 81 and the voice is converted to an audio signal which is transmitted to the portable touch screen device for communication or voice control.

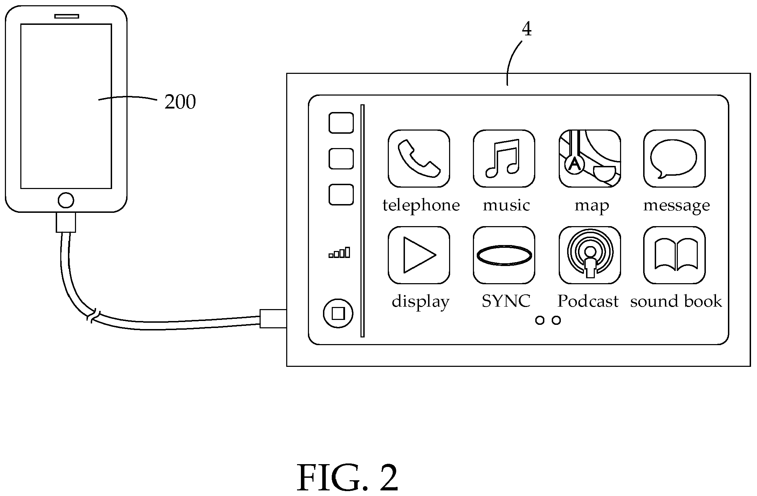

Referring to Fig. 2, a smart phone 200 utilizing iOS system is connected to the portable touch screen device of the invention through the first port 2. The first port 2 enables the function of "apple ready" detecting and activating the application programs installed in the smart phone. The images of the interface of the activated application programs are transmitted to the portable touch screen device of the invention and displayed on the touch screen 4. The user may view the interface of the interface of the activated application programs simultaneously and operate the interface through the touch screen 4. The operation signal generated by the touch screen 4 is transmitted to the smart phone 200 through the control unit 1, whereby the portable touch screen device of the invention provides the same functions as the original on-board system.

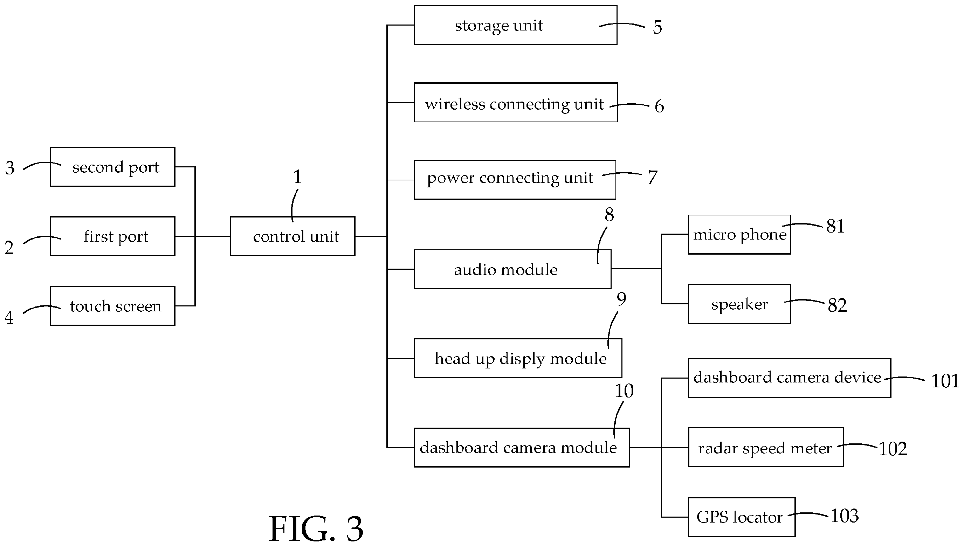

Referring to Fig. 3, another embodiment of the portable touch screen device of the invention is disclosed. The present embodiment further includes a head up display module 9 which is electrically connected to the control unit 1. The head up display module 9 is a head up display device mounted on a dashboard of the vehicle to display related data transmitted from the portable touch screen device or navigation routes, whereby the user does not need to watch the touch screen 4 to ensure driving safety. The present embodiment further includes a dashboard camera module 10 electrically connected to the control unit 1, wherein the dashboard camera module 10 includes a dashboard camera device 101, a radar speed meter 102 and a GPS locator 103 to record vehicle movement condition.

While the invention has been described by way of example and in terms of preferred embodiment, it is to be understood that the invention is not limited thereto. To the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. A portable touch screen (4) device for a vehicle, comprising:
a control unit (1) comprising a software development kit for Android system, wherein the control unit (1) serves as a control center and controls a plurality of aiding functions of the portable touch screen (4) device;
a first port (2) electrically connected to the control unit (1) and capable of recognizing whether a first device electrically connected to the first port (2) is equipped with iOS system, wherein the first port (2) has a function of Apple Ready capable of activating a first application program of the first device equipped with iOS system; and
at least one second port (3) electrically connected to the control unit (1) and capable of being connected to a second device of Android system, wherein the second device transmits images of an interface of a second application program or audio data to the portable touch screen (4) device;
a touch screen (4) electrically connected to the control unit (1), wherein the touch screen (4) displays an interface of the first application program or the second application program and transmits operation signals through the first port (2) or the second port (3);
a wireless connecting unit (6) electrically connected to the control unit (1), wherein an electronic device is connected to the portable touch screen (4) device through the wireless connecting unit (6);
a power connecting unit (7) electrically connected to the control unit (1), a power supply device of the vehicle and an audio device of the vehicle, wherein the power supply device of the vehicle provides electrical power for the portable touch screen (4) device;
an audio module (8) electrically connected to the control unit (1), wherein the audio module (8) comprises a microphone (81) receiving sound and transmitting an audio signal corresponding to the received sound to the first device or the second device, and a speaker (82) receiving an audio signal from the first device or the second device and giving off sound corresponding to the received audio signal.

2. The portable touch screen (4) device as claimed in claim 1, wherein the first port (2) is a lightning port.

3. The portable touch screen (4) device as claimed in claim 1, wherein the second port (3) is a universal serial bus (USB) port.

4. The portable touch screen (4) device as claimed in claim 1, wherein the second port (3) has Mirror Link standard.

5. The portable touch screen (4) device as claimed in claim 1 further comprising a storage unit (5) electrically connected to the control unit (1) storing application programs and data related to the portable touch screen (4) device.

6. The portable touch screen (4) device as claimed in claim 5, wherein the storage unit (5) is a hard disc drive or a solid state drive.

7. The portable touch screen (4) device as claimed in claim 1, further comprising a head up display electrically connected to the control unit (1) and mounted on a dashboard of the vehicle to display related data transmitted from the portable touch screen (4) device or navigation routes.

8. The portable touch screen (4) device as claimed in claim 1, further comprising a dashboard camera module (10) electrically connected to the control unit (1), wherein the dashboard camera module (10) comprises a dashboard camera device (101), a radar speed meter (102) and a GPS locator (103) to record vehicle movement condition.
